# EUROPEAN PATENT APPLICATION

(11) **EP 2 940 754 A1**
(43) Date of publication of application: **04.11.2015**
(21) Application number: 12824839.0
(22) Date of filing: 28.12.2012
(51) Int. Cl.: H01M 2/10, H05K 7/20

(54) **POWER STORAGE APPARATUS**

(71) Applicant: Hitachi, Ltd., Tokyo 100-8280 (JP)
(72) Inventor: TANAKA, Toru, Tokyo 104-0044 (JP); TANAKA, Katsuyoshi, Tokyo 104-0044 (JP); INOMATA, Akira, Tokyo 104-0044 (JP)
(74) Representative: Calderbank, Thomas Roger
(86) International application number: PCT/JP2012/084155
(87) International publication number: WO 2014/103038

(57) **Abstract**

A power storage system includes a power storage pack 58 of a power storage device such as a lithium ion secondary battery, supplies electric power to an external load from the power storage device, and charges the power storage device by electric power from outside. The power storage pack 58 is housed in a power storage rack 51 having a top plate 54, a bottom plate 55, and shelf boards 57. A fan case 64 is provided on the power storage rack 51. A ceiling fan 68 is mounted in the fan case 64, and when the ceiling fan 68 is to be attached to the fan case 64 and detached from the fan case 64, the ceiling fan 68 is attached and detached from a front side of an upper surface of the power storage rack 51.

## Description

### TECHNICAL FIELD

The present invention relates to a power storage system including power storage racks in which a large number of power storage packs of power storage devices such as lithium ion batteries are housed.

### BACKGROUND ART

A factory and an office building have a power storage system which is configured to back up the electric power during peak hours of electricity use and charge a power storage device made up of, for example, lithium ion secondary batteries and lithium ion capacitors during the period when electricity use is reduced. In the case of backing up the electric power in a factory and an office building, the power storage system is usually disposed in a power room provided in a building of the factory or the like. When a container in which the power storage system is mounted is disposed adjacent to the building of the factory, the electric power can be similarly backed up during peak hours of electricity use in the production facilities of the factory.

The container-mounted power storage system in which the power storage system is mounted in a container can be carried through land transportation by a trailer and marine transportation by a ship and can back up the electric power to an electric load in the event of a power outage. FIG. 5 of Patent Document 1 shows a power storage system configured to be provided in a marine container.

### PRIOR ART DOCUMENTS

### PATENT DOCUMENTS

Patent Document 1: Japanese Patent Application Laid-Open Publication No. 2012-23948

### SUMMARY OF THE INVENTION

### PROBLEMS TO BE SOLVED BY THE INVENTION

With including the case in which the power storage system is mounted in a container, the power storage system has a power storage unit in which a large number of power storage packs of power storage devices are housed, that is, a power storage rack. The power storage unit is disposed in a power room with a limited space in general, and a plurality of power storage units are installed in the power room. Since a lithium ion battery and a lithium ion capacitor as power storage devices generate heat at the time of charge and discharge, a cooling fan is provided for supplying cooling air in the power storage unit in which a large number of power storage packs are housed. The cooling fan needs to be detached from the power storage unit at the regular maintenance. However, since sufficient work space cannot be ensured around the power storage unit when the power storage unit is installed in the limited space of the power room, the work to detach and attach the cooling fan provided for the power storage unit has to be done in a narrow work space, and there is a problem of poor workability.

The power storage unit is fastened to a base floor surface of the power room for the enhancement of the earthquake protection. Also, power cables are connected to the power storage unit for the electrical connection to other control units, and a breaker is provided in the power storage unit for switching the power cable and other control units between the electrically connected state and the electrically disconnected state. However, since the power storage unit is disposed so as to abut on the wall surface of the power room, the workability is poor in the work to fasten the power storage unit by a fastening member and the work to detach the power storage unit from a back side of the power storage unit. In addition, when the breaker is disposed on a back side of the power storage unit, the maintenance work of the breaker is difficult. When the breaker is disposed on a front side of the power storage unit, since the cable bundle is running over the front side of the power storage unit, the breaker and the cable interfere with each other, so that the workability is deteriorated in the work to attach and detach the breaker at the time of maintenance.

An object of the present invention is to improve the workability in the maintenance of a power storage system.

### MEANS FOR SOLVING THE PROBLEMS

A power storage system according to one embodiment is a power storage system in which a power storage pack of a power storage device such as a lithium ion secondary battery and a control unit which controls power supplied to an external load are disposed in a power room, the power storage system includes: a power storage rack having a top plate, a bottom plate, and a plurality of shelf boards therebetween on which the power storage pack is housed, the power storage rack being disposed so as to abut on an installation wall surface of the power room; a fan case having an opening formed on a front side and vent holes and mounted on an upper surface of the power storage rack; a ceiling fan detachably attached in the fan case from the front side of the fan case and generating cooling air which enters from a front side of the power storage rack into the power storage rack and flows out through the top plate; and a front cover which covers the front side of the fan case, and the ceiling fan is attached and detached from the front side of the upper surface of the power storage rack.

### EFFECTS OF THE INVENTION

In this power storage system, a ceiling fan for generating a cooling air inside a power storage rack is provided on a top plate of the power storage rack, and the ceiling fan is detached from a front side of an upper surface of the power storage rack. Therefore, the ceiling fan can be detached and attached from the front side of the power storage rack at the time of maintenance of the ceiling fan, and the maintenance of the ceiling fan can be easily carried out.

### BRIEF DESCRIPTIONS OF THE DRAWINGS

FIG. 1 is a perspective view showing an external appearance of a container in which a power storage system is mounted;
FIG. 2A is a front view of FIG. 1;
FIG. 2B is a right side view of FIG. 2A;
FIG. 3 is a partially cutaway view of the container showing a power room;
FIG. 4 is a plan view showing the container in the state in which a top wall is removed;
FIG. 5 is a plan view showing an arrangement of steel members serving as support leg members attached to a bottom wall of the container;
FIG. 6A is a front view showing a power storage unit;
FIG. 6B is a right side view of FIG. 6A;
FIG. 6C is a plan view showing a bottom plate of the power storage unit;
FIG. 7A is a front view showing a power storage rack in the power storage unit;
FIG. 7B is a right side view of FIG. 7A;
FIG. 8 is an exploded perspective view showing a cooling machine provided on a top plate of the power storage rack; and
FIG. 9 is a perspective view showing a breaker provided in the power storage rack.

### BEST MODE FOR CARRYING OUT THE INVENTION

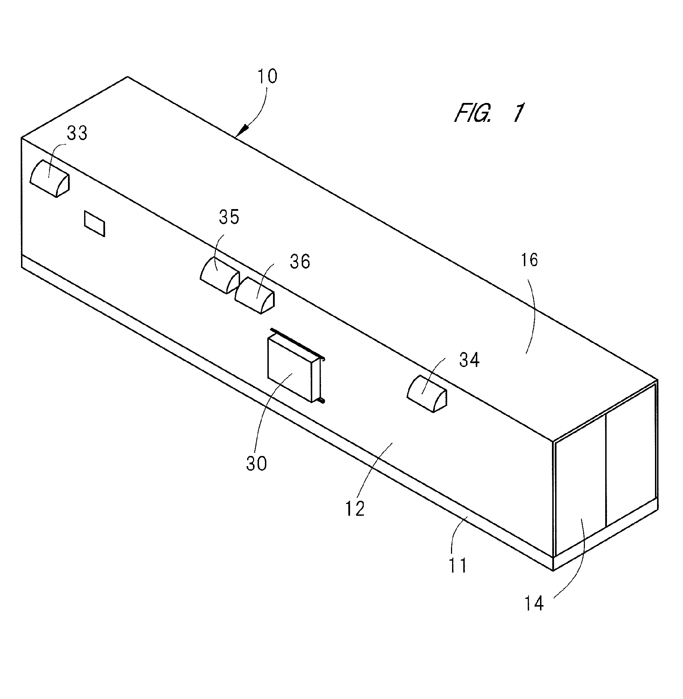

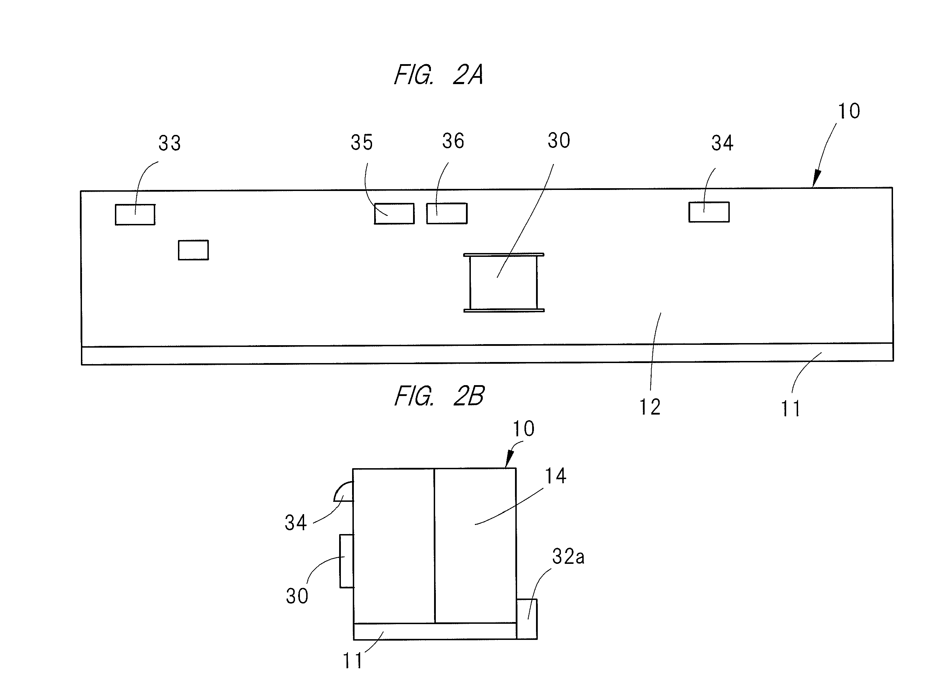

Hereinafter, an embodiment of the present invention will be described in detail with reference to the accompanying drawings. FIG. 1 to FIG. 5 show a container 10 in which a power storage system is mounted. The container 10 has a bottom wall 11, left and right side walls 12 and 13, front and back end walls 14 and 15, and a top wall 16, and a power room 17 is formed inside the container 10. The front and back end walls 14 and 15 are composed of openable doors, and equipment constituting the power storage system such as power storage devices is mounted in the power room 17 in the state in which these openable doors are kept open. The container 10 is mounted on a trailer and transported to a place where the power supply is needed by a tractor which pulls the trailer. For example, when the power storage system is to be installed adjacent to a building of a factory, the container is transported near a production block of the factory, and the power can be supplied to an electric load of the manufacturing facility.

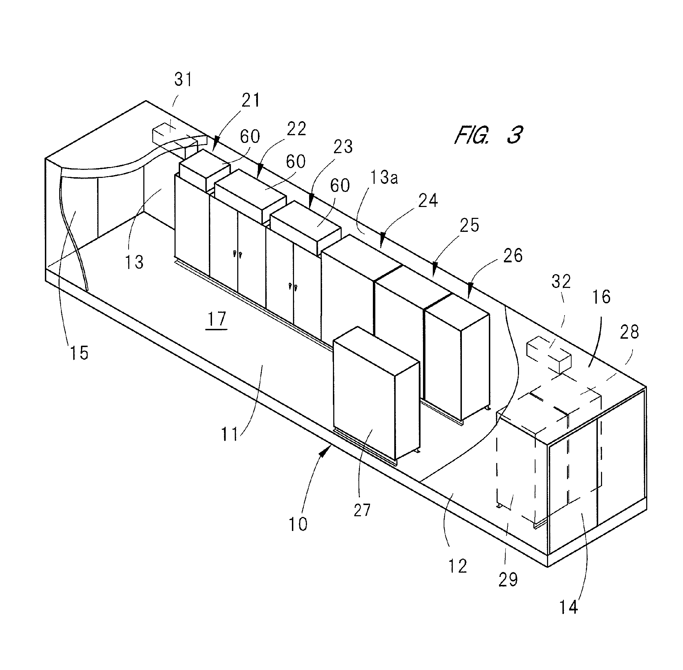

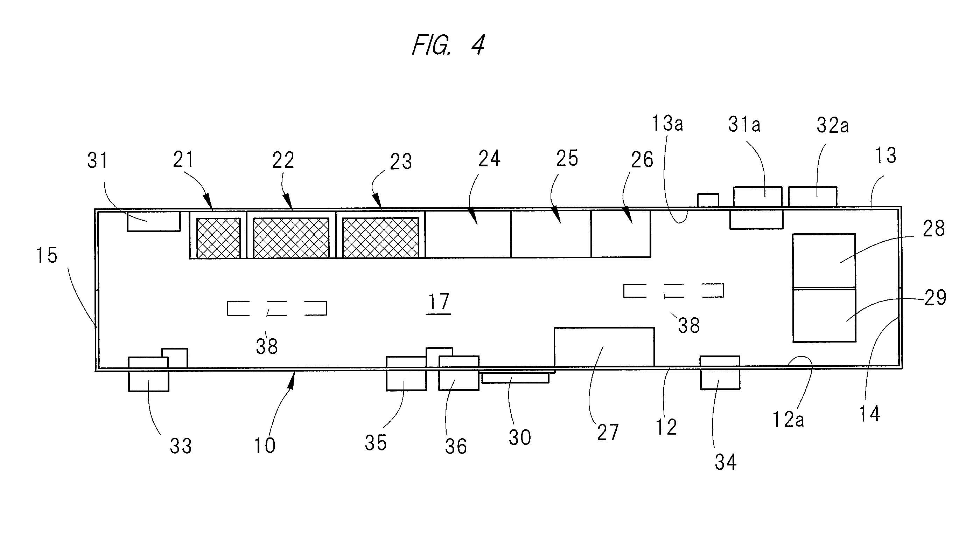

As shown in FIG. 3 and FIG. 4, in the power room 17, three power storage units 21 to 23 are disposed in a line so as to abut on an inner surface of one side wall 13, that is, an installation wall surface 13a. Furthermore, in the same line as these power storage units 21 to 23, respective control units such as a main circuit unit 24, an inverter unit 25, and a monitoring unit 26 are disposed in the power room 17 so as to abut on the installation wall surface 13a. A power receiving unit 27 is disposed in the power room 17 so as to abut on an inner surface of the other side wall 12, that is, an installation wall surface 12a and face the monitoring unit 26, and two power storage control units 28 and 29 are disposed in the power room 17 on one end wall 14 side. The power storage system is made up of such pieces of equipment as the power storage units 21 to 23 and others, and after these pieces of equipment are mounted in the power room 17, the openable doors constituting the end walls 14 and 15 are closed.

A large number of power storage packs including lithium ion capacitors serving as power storage devices are housed in the power storage unit 21, and a large number of power storage packs including lithium ion secondary batteries serving as power storage devices are housed in the power storage units 22 and 23. Each of the power storage devices has a function of storing the electric power supplied from the outside of the container 10 and a function of supplying the electric power to the external electric load. An outdoor distribution board 30 is provided on an outer surface of the side wall 12 of the container 10, and an input feed cable for supplying power from outside and an output feed cable for supplying power to an external load are connected to the outdoor distribution board 30.

AC current supplied from outside is converted to DC current by the power storage control unit 28 and then supplied to the power storage pack including the lithium ion capacitor serving as the power storage device, thereby charging the power storage device. This power storage control unit 28 has a function of converting DC current of the power storage device to AC current. On the other hand, AC current from outside is converted to DC current by the power storage control unit 29 and then supplied to the power storage pack including the lithium ion secondary battery serving as the power storage device, thereby charging the power storage device. This power storage control unit 29 also has a function of converting DC current from the power storage device to AC current. The monitoring unit 26 has a function of monitoring the operation of each unit and a function of controlling the respective pieces of equipment in the event of a power outage.

After the pieces of equipment such as the power storage units 21 to 23 constituting the power storage system are installed, a central area in a width direction of the power room 17 serves as a work space of a worker. For improving the working environment in the power room 17, air conditioners 31 and 32 are provided on both sides of the inner surface of the side wall 13, and outdoor units 31a and 32a of the respective air conditioners 31 and 32 are installed outside the container 10. For air exchange in the power room 17, ventilation fans 33 and 34 for air intake are provided on both sides of the side wall 12, and ventilation fans 35 and 36 for exhaust are provided at the center part of the side wall 12. Light fittings 38 are mounted on an inner surface of the top wall 16 as shown by two-dot chain lines in FIG. 4.

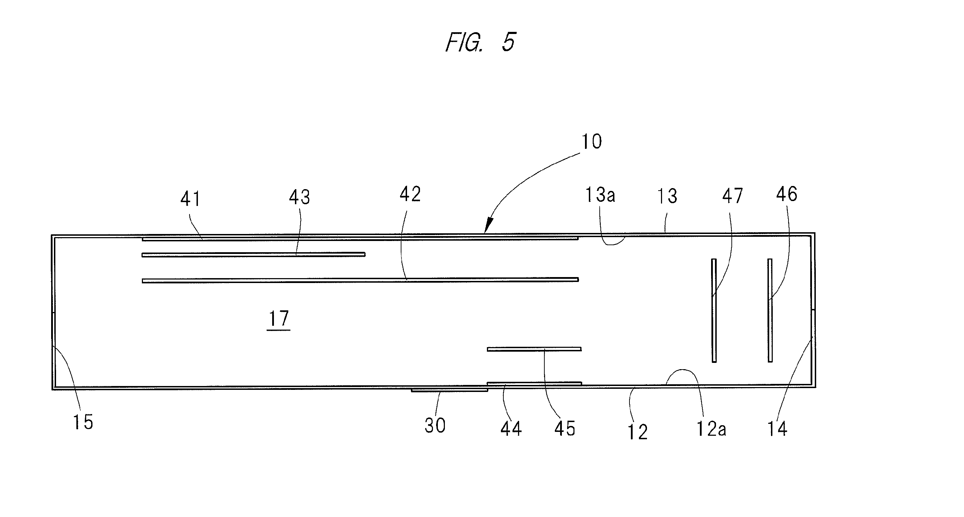

As shown in FIG. 5, three support leg members 41 to 43 are attached along the installation wall surface 13a of the side wall 13 on a floor surface of the bottom wall 11, and the power storage units 21 to 23 and other control units disposed in line with them are fixed to these support leg members 41 to 43. The support leg member 41 supports the rear end parts of the respective units including the power storage units, and the support leg member 42 supports the front end parts thereof. The support leg member 43 supports the parts near the center in the front-back direction of the three power storage unit 21 to 23.

Two support leg members 44 and 45 are attached along the installation wall surface 12a of the side wall 12 on a floor surface of the bottom wall 11, that is, a base floor surface, and the support leg member 44 supports the rear end part of the power receiving unit 27 and the support leg member 45 supports the front end part of the power receiving unit 27. Furthermore, support leg members 46 and 47 extending in a width direction of the container 10 are attached on the end wall 14 side on the floor surface of the bottom wall 11, and the support leg member 46 supports the rear end parts of the two power storage control units 28 and 29 and the support leg member 47 supports the front end parts thereof. The respective support leg members 41 to 47 are formed of channel steel having a U-shaped cross section.

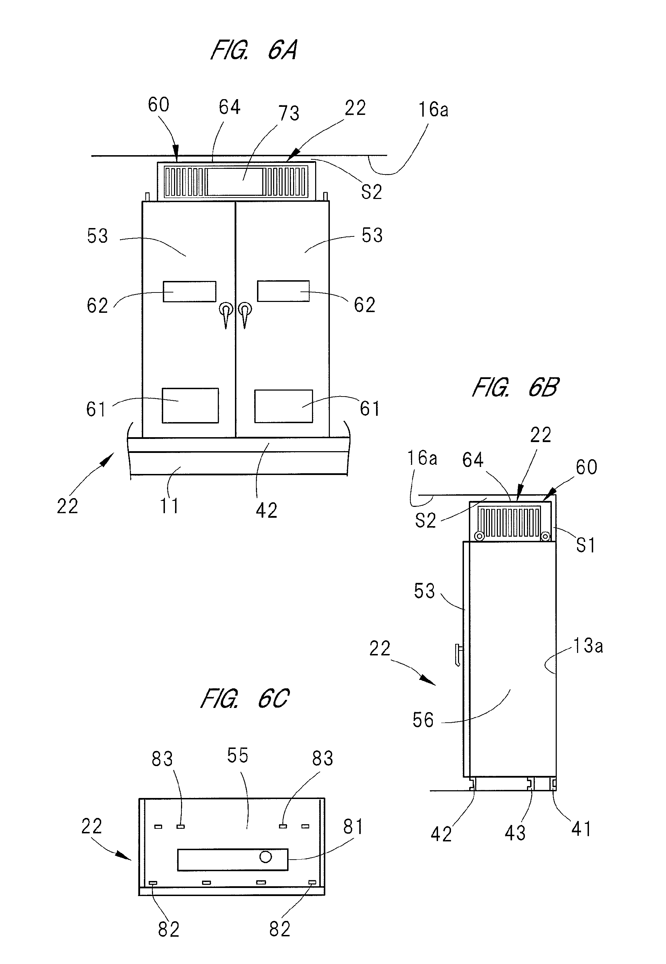

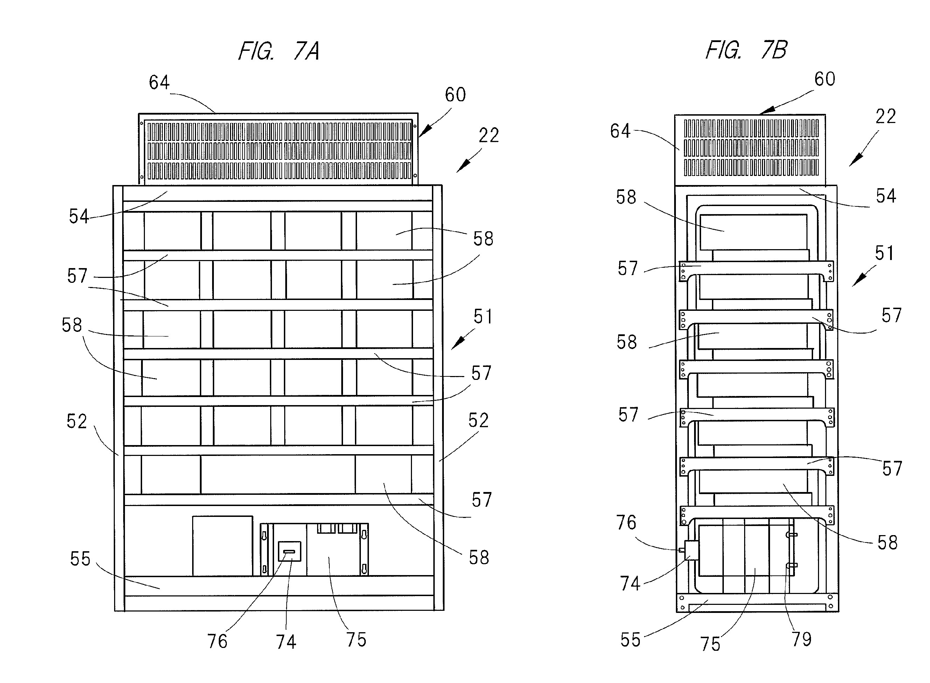

FIG. 6 shows the power storage unit 22 shown in FIG. 3, and FIG. 7 shows the power storage rack 51 in the power storage unit 22. The power storage rack 51 has front, back, left and right posts 52 and openable doors 53 are provided in an openable/closable manner on the front side as shown in FIG. 6. A top plate 54 is provided on an upper end part of the power storage rack 51 and a bottom plate 55 is provided on a lower end part thereof. Furthermore, a cover plate 56 is provided on each of rear side and left and right sides, and FIG. 6B shows the cover plate 56 on the right side of the power storage rack 51. A plurality of shelf boards 57 are provided in the power storage rack 51 at certain intervals in an up-down direction, and power storage packs 58 having the storage devices incorporated therein are housed on the respective shelf boards 57. Each of the power storage packs 58 has an almost rectangular parallelepiped shape whose length in a front-back direction of the power storage rack 51 is longer than the lengths in an up-down direction and a left-right direction. The power storage device constituting the power storage pack 58 is composed of a lithium ion secondary battery, and it has a charging function and a discharging function.

Since each of the power storage packs 58 generates heat at the time of charge and discharge, a ventilator 60 is provided in the top plate 54 so as to generate cooling air inside the power storage rack 51. In order to take the air in the power room 17 into the power storage rack 51, air inlets 61 are provided on the lower side of the operable doors 53 and air inlets 62 are provided near the center thereof in the up-down direction as shown in FIG. 6. The air inlet 61 is designed to have a larger opening area than the air inlet 62. Note that air inlets may be provided in the left and right cover plates 56 of the power storage rack 51.

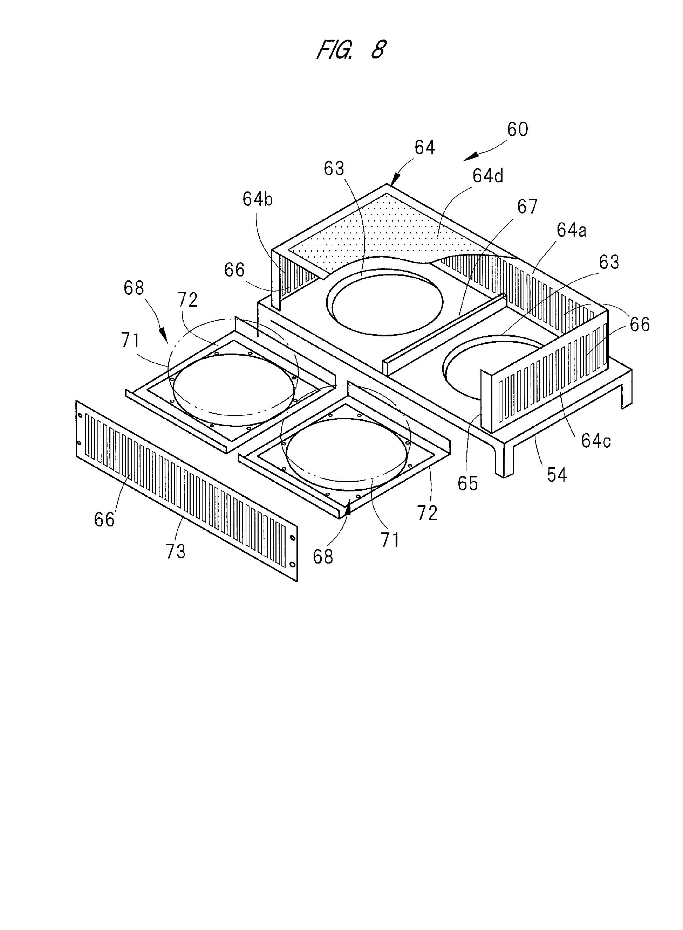

FIG. 8 is an exploded perspective view of the ventilator 60, and two through holes 63 are provided in the top plate 54. A fan case 64 is provided on the top plate 54, and this fan case 64 includes a rear-side case piece 64a, a left-side case piece 64b, a right-side case piece 64c, and an upper-side case piece 64d, and an opening 65 is provided on the front side. The rear-side case piece 64a, the left-side case piece 64b, and the right-side case piece 64c which constitute the fan case 64 are made of punched metal plates, and a large number of vent holes 66 are provided therein. On the other hand, the upper-side case piece 64d is made of a metal mesh plate, and a large number of vent holes 66 are provided therein. As the respective case pieces 64a to 64d which constitute the fan case 64, all of the case pieces may be made of metal mesh plates or punched metal plates as long as they have the vent holes 66.

As shown in FIG. 6 and FIG. 7, the length of the fan case 64 in a left-right direction is designed to be shorter than a width of the power storage rack 51 in a left-right direction. The length of the fan case 64 in a front-back direction is designed to be shorter than a width of the power storage rack 51 in a front-back direction, and a rear surface of the fan case 64 is shifted from the rear surface of the power storage rack 51 to the front side. Therefore, even when the rear surface of the power storage rack 51 is arranged to abut on the installation wall surface 13a, a vent space S1 is formed between the rear surface of the fan case 64 and the installation wall surface 13a. On the other hand, angle bars are attached to the inner surface of the top wall 16 of the container 10, and the height of the equipment installation space of the power room 17 ranges up to the inner surface 16a of the top wall 16 including the angle bars as shown in FIG. 6. A vent space S2 is formed between an upper surface of the upper-side case piece 64d of the fan case 64, that is, the upper surface of the fan case 64 and the inner surface 16a of the top wall 16.

As shown in FIG. 8, a guide rail 67 extending in a front-back direction is provided so as to protrude upwardly on the top plate 54 between the two through holes 63. Two ceiling fans 68 are detachably attached in the fan case 64, the ceiling fan 68 has a fan 71 shown by a two-dot chain line and a support frame 72 to which the fan 71 is attached, and the support frame 72 is made of an insulating member. The flow of cooling air which enters from the air inlets 61 and 62 and flows out from the vent holes 66 of the fan case 64 is formed in the power storage rack 51 by the ceiling fans 68, and the power storage packs 58 are cooled by the cooling air.

Positioning pins (not shown) are provided in each of the support frames 72, and positioning holes (not shown) are provided in the top plate 54 so as to correspond to the positioning pins. Alternatively, it is also possible to provide the positioning holes in the support frame 72 and provide the positioning pins in the top plate 54. Since the support frame 72 serving as an installation plate to which the fan is attached is made of an insulating member, the ceiling fan 68 can be insulated from the power storage rack 51.

When mounting the ceiling fans 68 to the upper surface of the top plate 54 of the power storage rack 51, the support frames 72 of the respective ceiling fans 68 are slid from the front side of the power storage rack 51 to the back side along the guide rail 67, and the positioning pins are then inserted into the positioning holes. In this manner, the ceiling fans 68 are mounted in the fan case 64 from the front side of the upper surface of the power storage rack 51. A front cover 73 which covers the opening 65 is detachably attached to the front side of the fan case 64, and the vent holes 66 are formed also in the front cover 73. The front cover 73 is secured by screws to the fan case 64.

When taking out the ceiling fan 68 from the fan case 64 at the time of maintenance of the ceiling fan 68, a worker removes the front cover 73 on the front side of the power storage unit 22, pulls out the ceiling fan 68 from the front side of the fan case 64, and withdraws the ceiling fan 68 to the front side of the upper surface of the power storage unit 22 through the opening 65 of the fan case 64.

The power storage rack 51 is disposed in the power room 17 with a limited space, and in order to ensure the work space of the worker, the power storage rack 51 is disposed so that the rear surface thereof abuts on the installation wall surface 13a, and the other power storage units 21 and 23 are disposed on both of left and right sides of the power storage unit 22. In addition, the space S2 between the fan case 64 and the top wall 16 is also limited. Therefore, on the rear side, the left and right sides, and the upper side of the power storage rack 51, there is no space for attaching and detaching the ceiling fan 68. However, since the ceiling fan 68 of the ventilator 60 is configured to be attached and detached from the front side of the upper surface of the power storage unit 22 as described above, the replacement and the maintenance of the ceiling fan 68 can be easily carried out.

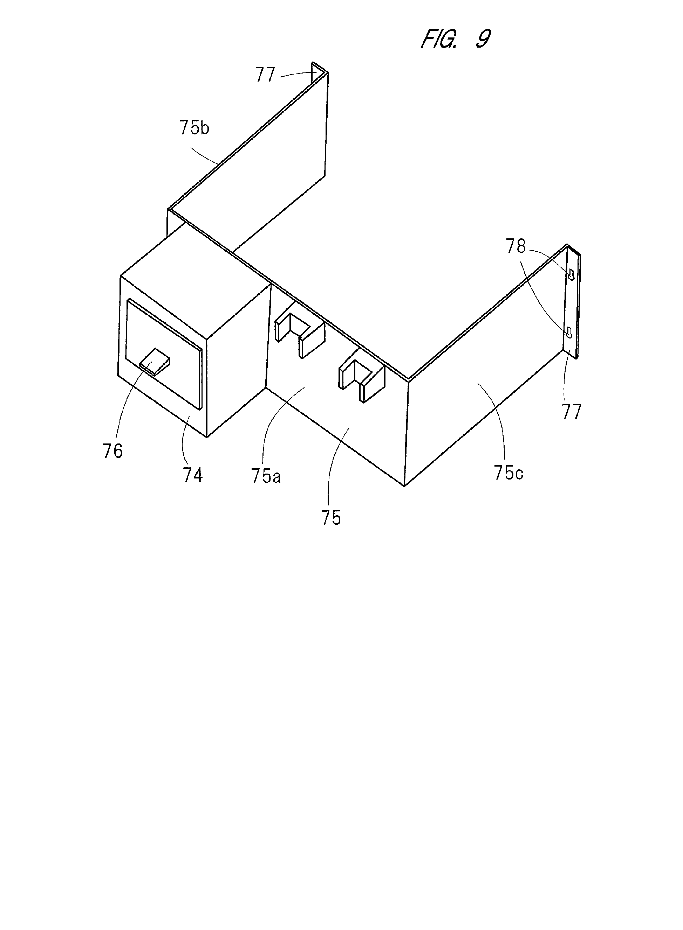

As shown in FIG. 7A, a breaker 74 for switching the power storage pack 58 housed in the power storage rack 51 and other units such as the control unit between the electrically connected state and the electrically disconnected state is detachably attached in the lower part of the power storage rack 51. The breaker 74 is attached to a mounting plate 75 as shown in FIG. 9. The mounting plate 75 has a front portion 75a and left and right side portions 75b and 75c bent from the left and right edges of the front portion 75a. The breaker 74 is attached to the front portion 75a, and the breaker 74 is provided with an operation switch 76. A flange 77 is provided at each of rear edges of the left and right side portions 75b and 75c, and mounting holes 78 are formed in each of the flanges 77. In the power storage rack 51, screws 79 can be attached so as to correspond to the mounting holes 78 as shown in FIG. 7B, and the breaker 74 can be attached and detached together with the mounting plate 75 from the front side of the power storage rack 51 by loosening and tightening the screws 79. Since the breaker 74 can also be attached and detached from the front side of the power storage rack 51, not only the operation of the operation switch 76 of the breaker 74, but the replacement and the maintenance thereof can be easily carried out.

FIG. 6C is a plan view showing the bottom plate 55 of the power storage rack 51. A wiring hole 81 through which the wiring is passed is formed in the bottom plate 55 on the front side. As described above, the power storage rack 51 is of a front-wiring type in which the wiring hole 81 is provided on the front side of the power storage rack 51. When the breaker 74 is disposed on an inner side relative to the front side of the power storage rack 51, the wiring passing through the wiring hole 81 interferes with the breaker 74. For its prevention, the breaker 74 is attached to the mounting plate 75 so that the breaker 74 is located near the front side of the power storage rack 51. In this manner, since the breaker 74 can be attached and detached together with the mounting plate 75, the interference between the bundle of wiring and the breaker 74 can be prevented, and the maintenance thereof can be easily carried out.

As shown in FIG. 6C, on the front side of the bottom plate 55, a plurality of mounting holes 82 through which screws (not shown) fastened to the support leg member 42 shown in FIG. 5 are attached are provided. Furthermore, in the bottom plate 55, a plurality of mounting holes 83 are provided at some distance from the back surface toward the front side, and screws (not shown) attached to the respective mounting holes 83 are fastened to the support leg member 43 shown in FIG. 5. The respective screws are fastener members for detachably fastening the power storage rack 51 to the support leg members 42 and 43.

As shown in FIG. 6B, the power storage rack 51 is disposed on the three support leg members 41 to 43, and the power storage rack 51 is fastened by screws to the support leg member 42 on the front side and the support leg member 43 located at some distance from the back surface toward the center of the power storage rack 51 in a front-back direction. In this manner, when the power storage rack 51 is fixed by screws to the base floor surface 11a of the bottom wall 11 of the container 10 through the support leg members 42 and 43, the worker performs screw fastening work to the support leg member 42 on the front side and the support leg member 43 located at some distance from the back surface, that is, near the center in the front-back direction, and the screw fastening work to the support leg member 41 on the back side becomes unnecessary. As a result, when the power storage rack 51 is installed in the power room 17 of the container 10, the power storage rack 51 can be fixed to the bottom wall 11 by the screw fastening work from the front side of the power storage rack 51. Note that other control units such as the main circuit unit 24 can be fixed by using fastener members to the support leg members in the same manner.

FIG. 6 to FIG. 9 show the power storage rack 51 of the power storage unit 22 shown in FIG. 3, and other power storage units 21 and 23 also have the same structure. However, the width of the power storage unit 21 in the left-right direction is designed to be shorter than those of the other power storage units 22 and 23, and one ceiling fan is provided in the fan case 64 of the power storage unit 21.

As described above, the ventilator 60 for releasing the heat generated from the power storage packs 58 mounted in the power storage rack 51 is provided on the top plate 54 of the power storage rack 51. The power storage rack 51 is disposed so as to abut on the installation wall surface 13a and a sufficient space cannot be ensured between the top wall 16 and the fan case 64, but by virtue of the structure in which the ceiling fan 68 is attached and detached from the front side of the fan case 64, the ceiling fan 68 can be easily attached and detached. In addition, since the breaker 74 can be detached from the front side of the power storage rack 51 together with the mounting plate 75, the maintenance of the breaker 74 in the power storage rack 51 of the front-wiring type can be easily carried out.

As described above, since the power storage rack 51 constituting each of the power storage units 21 to 23 has the front-maintenance structure in which the maintenance of the ceiling fan 68 and the breaker 74 can be carried out on the front side of the power storage rack 51, the workability can be improved. In addition, since the power storage units 21 to 23 are disposed so that the back surfaces thereof abut on the installation wall surface of the power room 17, the power storage unit including the ventilator 60 can be downsized, and the mountability thereof can be improved. This improvement in mountability makes it possible to improve the workability in the work to install and fasten the power storage unit onto the base floor surface of the power room 17.

The power storage rack 51 constituting each of the power storage units 21 to 23 is mounted in the container 10 as shown in FIG. 1 to FIG. 5, but the power storage unit can be disposed in a power room of a building instead of being mounted in the container 10. Also in that case, even when the power storage unit is disposed in the power room so as to abut on an installation wall surface of a side wall of the building, the maintenance of the ceiling fan 68 and the breaker 74 can be easily carried out. Furthermore, the work to attach and detach the power storage unit to and from the base floor surface can be easily carried out.

The present invention is not limited to the embodiment described above, and various modifications and alterations can be made within the scope of the present invention.

### INDUSTRIAL APPLICABILITY

This power storage system is disposed in a power room of a building, a container, and others and is used to supply power from a power storage device to an external electric load. The power storage device can be charged by the power supplied from outside.

## Claims

1. A power storage system in which a power storage pack of a power storage device such as a lithium ion secondary battery and a control unit which controls power supplied to an external load are disposed in a power room, the power storage system comprising:
a power storage rack having a top plate, a bottom plate, and a plurality of shelf boards therebetween on which the power storage pack is housed, the power storage rack being disposed so as to abut on an installation wall surface of the power room;
a fan case having an opening formed on a front side and vent holes and mounted on an upper surface of the power storage rack;
a ceiling fan detachably attached in the fan case from the front side of the fan case and generating cooling air which enters from a front side of the power storage rack into the power storage rack and flows out through the top plate; and
a front cover which covers the front side of the fan case,
wherein the ceiling fan is attached and detached from the front side of the upper surface of the power storage rack.

2. The power storage system according to claim 1,
wherein a mounting plate is detachably attached to the power storage rack from the front side of the power storage rack,
a breaker which switches the power storage pack and the control unit between an electrically connected state and an electrically disconnected state is provided on the mounting plate, and
the breaker is attached and detached together with the mounting plate from the front side of the power storage pack.

3. The power storage system according to claim 2,
wherein the mounting plate is provided in a lower part of the power storage rack.

4. The power storage system according to claim 1,
wherein mounting holes of fastener members for fixing the power storage rack to a base floor surface of the power room are provided on a front side of the bottom plate of the power storage rack.

5. The power storage system according to claim 4,
wherein support leg members are fixed along the installation wall surface to the base floor surface of the power room so as to be located on the front side of the power storage rack and near a center of the power storage rack in a front-back direction, and
the power storage rack is fastened to the support leg members by the fastener members.

6. The power storage system according to claim 1,
wherein the power room is formed in a container mounted on a trailer, the container having front and back end walls, left and right side walls having the installation wall surfaces on their inner surfaces, a top wall, and a bottom wall, and
the power storage rack is disposed so as to abut on the installation wall surface of the side wall.

7. The power storage system according to claim 6,
wherein an outdoor distribution board is provided on an outer surface of the side wall of the container, and
a feed cable which outputs power to an external electric load is connected to the outdoor distribution board.
